Europäisches Patentamt

(19) European Patent Office

Office européen des brevets

(11) Numéro de publication: **0 267 121 B1**

(12) **FASCICULE DE BREVET EUROPEEN**

(45) Date de publication de fascicule du brevet:
21.08.91

(21) Numéro de dépôt: 87402495.3

(22) Date de dépôt: 05.11.87

(51) Int. Cl.⁵: **C03B 23/035, C03B 35/16**

(54) Procédé et installation de bombage de plaques de verre, à capacité élevée.

(30) Priorité: 06.11.86 FR 8615489

(43) Date de publication de la demande:
11.05.88 Bulletin 88/19

(45) Mention de la délivrance du brevet:
21.08.91 Bulletin 91/34

(84) Etats contractants désignés:
AT BE CH DE ES FR GB IT LI LU NL SE

(56) Documents cités:
FR-A- 2 085 464
FR-A- 2 567 508

(73) Titulaire: **SAINT-GOBAIN VITRAGE INTERNA-TIONAL**
**18, avenue d'Alsace**
**F-92400 Courbevoie(FR)**

(72) Inventeur: **Colmon, Daniel**
**8, rue François Mauriac**
**F-95130 Franconville(FR)**
Inventeur: **Mathivat, Denis**
**7, Avenue du Gros Buisson**
**F-60150 Thourotte(FR)**
Inventeur: **Philibert, Daniel**
**5, Avenue de Caumont**
**F-60150 Thourotte(FR)**

(74) Mandataire: **Leconte, Jean-Gérard et al**
**Saint-Gobain Recherche 39, Quai Lucien Le-franc**
**F-93304 Aubervilliers Cedex(FR)**

EP 0 267 121 B1

## Description

L'invention concerne le bombage de plaques de verre dans une installation de bombage à capacité élevée comportant une possibilité de bombage simultané de plusieurs plaques de verre, cette installation étant du type dans lequel une plaque de verre est portée à sa température de bombage, amenée sur un convoyeur, arrêtée sous un élément supérieur de transfert et/ou de bombage, prise en charge par cet élément supérieur, puis relachée sur un élément inférieur d'évacuation et/ou de bombage introduit pendant que ladite plaque est appliquée contre l'élément supérieur de transfert et/ou de bombage.

Il est connu par les documents de brevet français et FR-A-2085464, FR-A-2567508 d'utiliser des éléments supérieurs aptes à traiter une plaque de verre à la fois.

Cependant pour augmenter les capacités de production lorsque les vitrages bombés fabriqués sont de petite taille, il est intéressant de bomber simultanément plusieurs plaques de verre.

Si les plaques de verre à traiter simultanément sont fournies sur le convoyeur disposées les unes à côté des autres et que les différents postes disponibles sur un même élément supérieur sont juxtaposés transversalement par rapport à la direction d'avancement du convoyeur, tout se passe dans la synchronisation des opérations, comme dans le cas d'une seule plaque de verre. Les différentes plaques de verre suivent deux trajets parallèles exactement identiques et elles doivent donc subir des traitements de bombage rigoureusement identiques.

Cela implique que les plaques de verre conservent tout au long de leur trajet des positions relatives exactement identiques ; or cela peut être difficile à obtenir et il est impossible de corriger la position d'une seule plaque de verre sans modifier la position de l'autre dans la mesure où elles sont toutes sur un seul et même convoyeur.

Par ailleurs, il a déjà été proposé dans EP-A-67509 et EP-A-103421 de juxtaposer deux emplacements de bombage sur un même élément supérieur, l'un après l'autre dans la direction longitudinale d'avancement du convoyeur. Mais la mise en place des plaques de verre sous chaque emplacement de bombage nécessite des moyens d'amenée compliqués de façon à organiser un rattrapage du retard de la plaque de verre la plus en amont vis-à-vis de celle la plus en aval, grâce à des systèmes de détection, des moyens de logique, des convoyeurs indépendants. Ainsi à chaque plaque de verre un trajet et des vitesses nouveaux sont à définir. En outre malgré ces moyens complexes mis en oeuvre, il n'y a pas de certitude du parfait positionnement des deux plaques de verre en fin de parcours sous l'élément supérieur, car d'une part la détection des plaques de verre s'effectue à une distance relativement importante de cette fin de parcours et des déviations et toutes sortes de perturbations peuvent intervenir jusqu'à la fin du parcours, car d'autre part les détections optiques telles que proposées sont imprécises aux températures élevées qui règnent dans les installations de bombage.

La simplification du dispositif amenerait à soumettre au bombage des plaques de verre éventuellement arrivées à des instants différents sous leur emplacement de bombage ayant effectué des trajets différents, donc des plaques de verre dans des états thermiques différents d'où des différences de bombage pour ces plaques de verre.

La présente invention vise à résoudre ces problèmes liés à la possibilité pour les plaques de verre de glisser pendant leur trajet et donc de ne pas conserver des positions relatives strictement identiques, à la difficulté de juxtaposer deux postes de bombage dans la direction longitudinale du fait de l'impossibilité de positionner séparément avec précision et avec de s moyens simples des plaques de verre qui se suivent et de l'impossiblité de garantir des conditions thermiques identiques pour des plaques de verre arrivant à des positions finales différentes sous un même élément supérieur, éventuellement à des moments différents.

Elle vise à permettre le bombage au cours d'un même cycle de plaques de verre qui, bien qu'amenées les unes après les autres sur un même convoyeur, sont positionnées individuellement en regard de leur poste de bombage et/ou de transfert respectif, et qui bien qu'ayant des états thermiques différents du fait de leur succession dans la direction longitudinale, sont traitées par un seul et même élément supérieur.

L'invention propose pour cela un procédé de bombage du type du procédé connu du préambule de la revendication 1 et selon lequel à chaque cycle de bombage, plusieurs plaques de verre réchauffées dans un four sont amenées les unes à la suite des autres par un même convoyeur sur des sections séparables dudit convoyeur qui se suivent dans sa direction longitudinale d'avancement et sont au moins en partie disposées sous un élément supérieur comportant plusieurs emplacements de bombage et/ou de transfert qui se succèdent dans la direction longitudinale, sont prises en charge par cet élément supérieur, sont relâchées sur des éléments inférieurs d'évacuation et/ou de bombage entrés entre-temps sous l'élément supérieur, puis sont évacuées.

Le procédé de bombage selon l'invention se caractérisant en ce que les prises en charge et/ou les relâchements de toutes les plaques de verre, au cours d'un même cycle, ont lieu indépendamment les unes des autres, à des instants qui peuvent être différents d'une plaque de verre à l'autre et en ce que les plaques de verre devant être traitées au cours d'un même cycle sont positionnées indépendamment les unes des autres sous leurs emplacements respectifs de bombage et/ou de transfert sur des sections du convoyeur rendues indépendantes, équipées chacune de leurs propres moyens d'entraînement, de positionnement et d'arrêt des plaques de verre.

Avantageusement, l'évacuation des vitrages bombés se fait latéralement.

L'invention propose également une installation de bombage du type décrit au préambule de la revendication 7 comportant un four de réchauffage, une cellule de bombage comportant un élément supérieur à plusieurs emplacements qui se succèdent dans une direction longitudinale, un convoyeur à plusieurs sections séparables qui se suivent dans la direction longitudinale qui est celle de son avancement, traversant le four et amenant les plaques de verre dans la cellule de bombage, et au moins un élément inférieur d'évacuation et/ou de bombage sur lequel sont relâchées les plaques de verre après qu'elles aient été saisies par l'elément supérieur et appliquées contre ses emplacements et que l'élément et/ou les éléments inférieurs soient entrés pour se disposer sous les plaques de verre.

Cette installation étant, conformément à la partie caractéristique de la revendication 7 telle qu'à chaque emplacement de l'élément supérieur soit associés des moyens de retenue propres par dépression, aptes à fonctionner indépendamment des autres moyens de retenue par dépression associés aux autres emplacements et que chacune des sections séparables du convoyeur est disposée au moins en partie sous un emplacement et est équipée de ses propres moyens d'entraînement et de ses propres moyens de positionnement et d'arrêt des plaques de verre sous l'emplacement qu'elle alimente.

L'invention sera maintenant décrite plus en détail en référence aux figures jointes qui représentent :

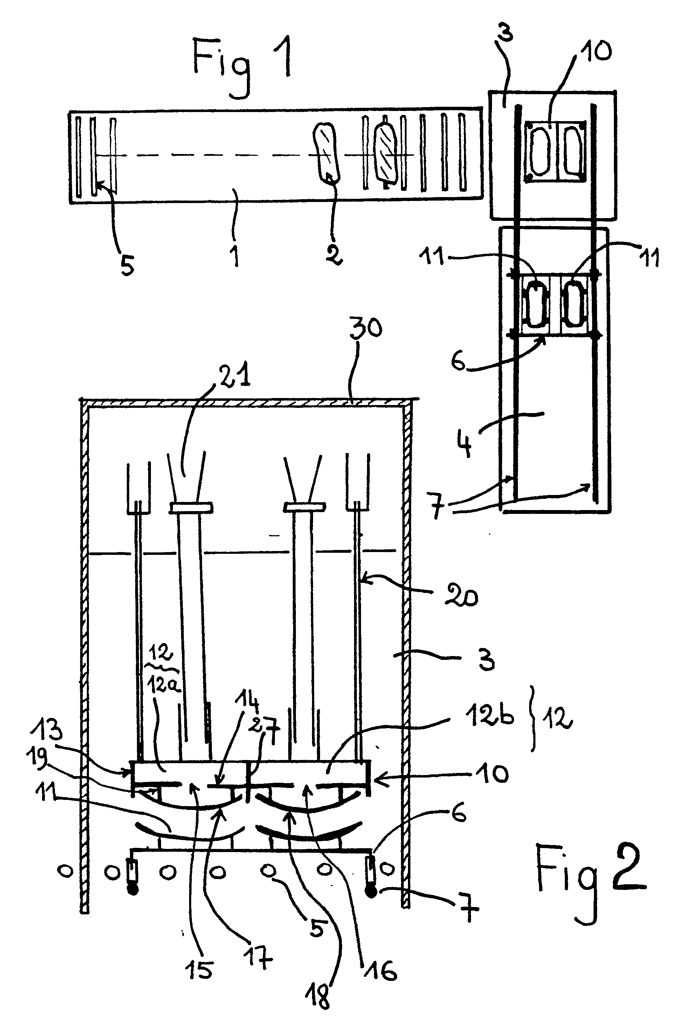

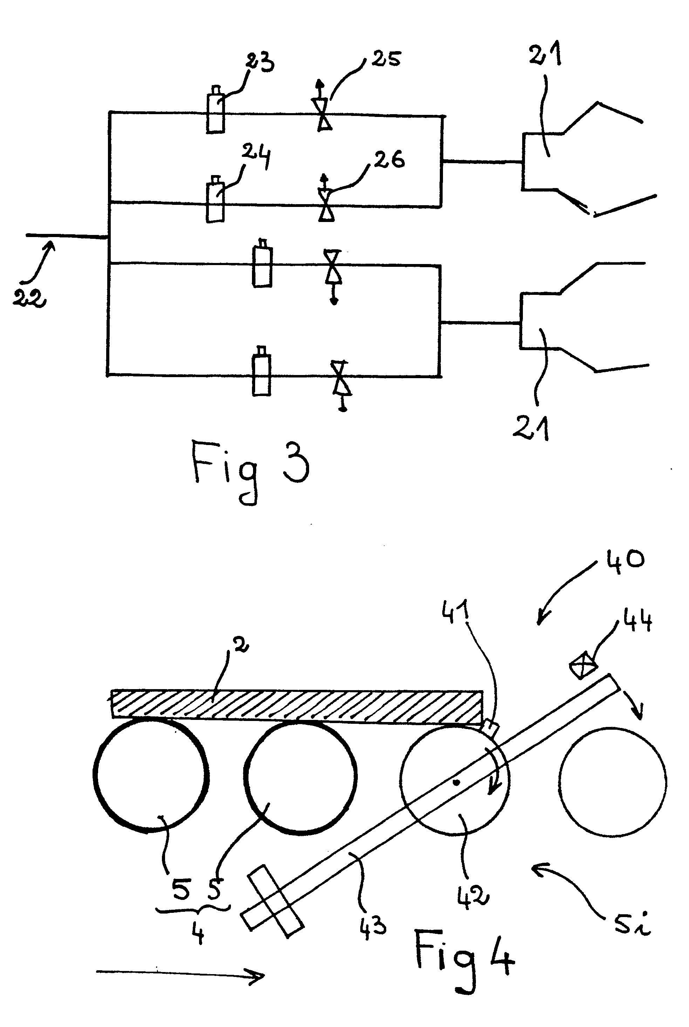

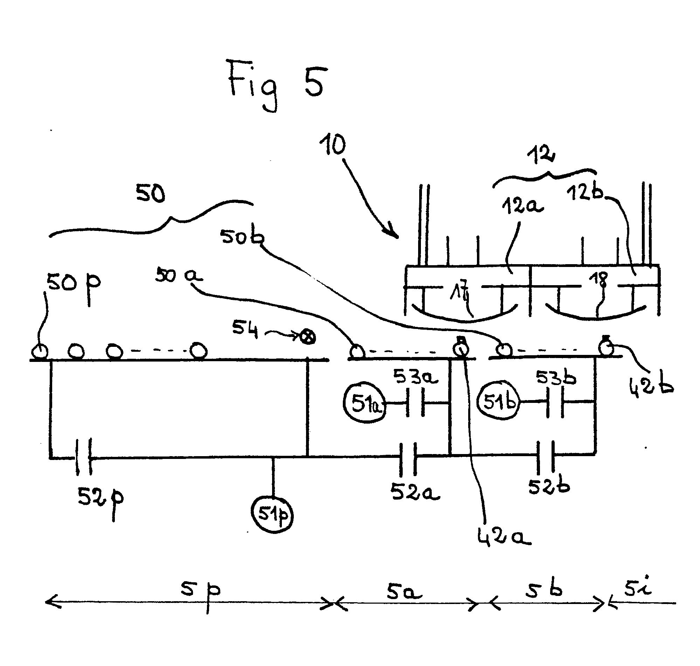

> . **figure 1** : une vue d'ensemble de l'installation de bombage et de trempe selon l'invention,
> . **figure 2** : une vue schématique d'un élément de bombage à plusieurs postes dans une cellule de bombage,
> . **figure 3** : une vue schématique des moyens d'aspiration et de leur circuit d'alimentation,
> . **figure 4** : une vue détaillée de l'un des moyens de positionnement et d'arrêt des plaques de verre sous leur poste ou emplacement respectif de bombage et/ou de transfert.
> . **Figure 5** : une vue schématique de principe du convoyeur à plusieurs sections.

L'installation montrée figure 1 comprend un four 1 de réchauffage de plaques de verre telles que 2, une cellule de bombage 3, un poste de trempe 4, un convoyeur 5 d'amenée des plaques de verre à la cellule de bombage 3 qui traverse le four 1 et des moyens d'évacuation des plaques de verre 2 bombées de la cellule de bombage 3 vers le poste de trempe 4.

Le convoyeur 5 d'amenée est par exemple un convoyeur à rouleaux avantageusement recouverts d'une gaine de fils de silice ou de verre tressés ou tricotés.

Les moyens d'évacuation des plaques de verre bombées comprennent des chariots 6 mobiles sur des rails 7, ces chariots étant aptes à maintenir le verre sans qu'il se déforme avant d'être soumis à la trempe. Ce sont par exemple des cadres à profil courbe ouvert en leur centre.

La cellule de bombage 3 contient un élément supérieur 10 de transfert et/ou de bombage disposé au-dessus du convoyeur 5 et au moins un élément inférieur 11 d'évacuation et/ou de bombage apte à venir se placer sous l'élément supérieur 10 pour recevoir la ou les plaques de verre que celui-ci lache.

Dans certains cas, l'élément supérieur est un simple élément de transfert : les plaques de verre arrivant sur le convoyeur d'amenée 5 sont prises en charge par cet élément supérieur 10 de façon à dégager le convoyeur et ainsi permettre à un élément inférieur de bombage 11 de venir se mettre en place sous les plaques de verre. Les plaques de verre sont alors lachées par l'élément supérieur de transfert 10 et reçues par l'élément inférieur 11 de bombage dont elles épousent la forme. Un élément inférieur 11 de bombage est par exemple un cadre à profil courbe, ouvert en son centre, monté sur un chariot tel qu'indiqué précédemment, ce chariot pouvant servir aussi à évacuer la plaque de verre bombée vers la trempe.

Dans d'autres cas, l'élément supérieur 10 est un élément à la fois de transfert et de bombage, c'est-à-dire qu'une plaque de verre appliquée contre lui pour dégager le convoyeur d'amenée 5 et ainsi permettre l'entrée d'un élément inférieur 11 de bombage tel un cadre de bombage à profil courbe ouvert en son centre, monté sur un chariot, acquiert un prébombage en épousant exactement ou approximativement la forme courbe de cet élément supérieur 10.

Dans d'autres cas, l'élément supérieur 10 est essentiellement un élément de bombage, et l'élément inférieur 11 est uniquement un élément d'évacuation, c'est-à-dire qu'une plaque de verre appliquée contre cet élément supérieur 10 courbe, acquiert la totalité de son bombage définitif au contact dudit élément supérieur et qu'elle n'est déposée sur l'élément inférieur 11 que pour être évacuée vers le poste de travail suivant, en général un poste de trempe. Avantageusement, même dans ce dernier cas, l'élément inférieur d'évacuation a une forme courbe, identique à la forme acquise par la plaque de verre, de façon à pouvoir la transporter sans la déformer au poste de travail suivant, notamment au poste de trempe. Ainsi c'est par exemple un cadre à profil courbe ouvert en son centre.

Un tel procédé de bombage selon ces derniers cas est par exemple décrit dans le document de brevet français FR-A-2 567 508 et déjà cité.

L'élément supérieur 10 de bombage et/ou de transfert comprend comme montré figure 2 un caisson 12 dont les parties latérales 13 forment une jupe autour d'une plaque de fond 14. Cette plaque de fond 14 est percée de plusieurs excavations, par exemple deux 15 et 16, juxtaposées dans la direction longitudinale de l'installation, de dimensions proches de celles des plaques de verre à traiter, ces excavations étant équipées à un niveau légèrement inférieur à celui de la plaque de fond 14 (quelques millimètres en particuliers entre 1 et 10 mm et par exemple autour de 3 mm) de deux éléments d'appui 17 et 18 des plaques de verre à bomber et/ou à transférer, ces éléments d'appui étant reliés à la plaque de fond 14 par des attaches 19.

Ce caisson 12 et ses accessoires : plaque de fond 14, éléments d'appui 17 et 18 sont montés de façon à pouvoir avoir un mouvement ascendant ou descendant. Ainsi, ce caisson est porté par quatre vérins tels que 20. Ces différents mouvements sont commandés par un automate avec système de carte d'axe, ce qui permet en particulier d'effectuer toute correction de positionnement de l'ensemble formé par le caisson 12 et ses accessoires, vis-à-vis des plaques de verre posées sous lui, sur le convoyeur 5, pour tenir compte notamment d'imprécisions ou d'écarts dans le positionnement, dus à la chaleur en particulier qui règne au poste de bombage.

Dans la mesure où les plaques de verre sont prises en charge par cet élément supérieur de bombage et/ou de transfert grâce à une dépression qui s'exerce au travers de cet élément ou à sa périphérie, ce caisson 12, comme dit dans les documents de brevets antérieurs déjà cités, est relié à des moyens d'aspiration, notamment des trompes d'aspiration telles que 21 (fig.3), de préférence alimentés en air chaud par exemple prélevé par des tubes 22 dans le four 1. Ces moyens d'aspiration montrés figure 3 tels des trompes 21 sont alimentés chacun par un circuit comportant en parallèle deux moyens 23, 24 de réglage de pression et deux électrovannes 25, 26 commandées par automate, l'un des moyens de réglage de

pression, par exemple 23, associé à l'électrovanne 25, étant réglé pour une différence de pression relativement élevée qui permet d'exercer au niveau de la plaque de fond 14 une dépression importante pour soulever les plaques de verre et les prendre en charge, l'autre, par exemple 24, associé à l'électrovanne 26 étant réglé pour une différence de pression relativement basse qui permet d'exercer au niveau de la plaque de fond 14 une dépression plus faible pour seulement maintenir les plaques de verre appliquées contre les plaques d'appui 17, 18 de l'élément supérieur 10.

Selon l'invention, le caisson 12 est divisé en autant de chambres qu'il y a d'emplacements de bombage et/ou de transfert prévus dans l'élément supérieur 10. Ainsi, dans la mesure où deux emplacements sont prévus, correspondants à deux éléments d'appui 17 et 18, une cloison de séparation est prévue dans le caisson 12, limitant deux chambres 12 a et 12 b, chacune en relation avec un emplacement de bombage et/ou de transfert. Bien entendu, un nombre plus important de chambres telles que 12 a ou 12 b, chacune en relation avec un emplacement de bombage et/ou de transfert et à un élément d'appui tels que 17 ou 18, est également possible ainsi par exemple trois chambres 12 a, 12 b, 12 c reliées à des moyens d'aspiration indépendants. Chaque chambre telle que 12 a et 12 b est alors alimentée par ses propres moyens d'aspiration.

Ce caisson 12 et ses accessoires, ainsi que les moyens de production de la dépression sont disposés à l'intérieur d'une enceinte fermée 30 maintenue à haute température grâce à des moyens de chauffage non représentés sur les figures, notamment des résistances électriques qui tapissent les parois isolées de ladite enceinte 30. Avantageusement, ces moyens de chauffage sont également disposés sur la sole de cette enceinte 30, et de préférence ils sont répartis en zones distinctes non représentées sur les dessins, commandables séparément, disposées chacune sous un emplacement de bombage.

Dans la mesure ou plusieurs emplacements de bombage se succèdent dans la direction longitudinale, il en résulte une succession de zones de chauffage séparées dans la direction longitudinale.

Dans la mesure où des emplacements de bombage sont aussi juxtaposés dans la direction transversale, il en résulte une pluralité de zones de chauffage disposées en damiers.

Au cas où les moyens de chauffage disposés sur la sole ne sont pas répartis en zones distinctes, une différenciation du chauffage suivant des surfaces qui correspondent aux emplacements de bombage est également possible en interposant entre ces moyens de chauffage et les plaques de verre, des caches qui peuvent être différents d'une surface à l'autre.

Dans l'enceinte 30 l'entrée et la sortie des plaques de verre s'effectuent au travers des portes soulevées par des chaines s'enroulant sur des poulies entraînées par moteur, ce moteur étant soulagé par des contrepoids associés à chaque poulie. Ces éléments pour soulever les portes sont classiques et non représentés sur des figures.

Les plaques de verre 2 à bomber sont donc amenées sous l'élément supérieur 10 et plus précisément sous les éléments d'appui tels 17 et 18 appartenant à plusieurs postes ou emplacements de bombage et/ou de transfert du même élément supérieur par le convoyeur globalement référencé 5.

Pour permettre le positionnement précis de plusieurs plaques de verre 2 se succédant sur le même convoyeur 5 sous les éléments d'appui tels que 17 et 18 de plusieurs emplacements de bombage et/ou de transfert juxtaposés dans la direction longitudinale de l'installation, ce convoyeur 5 possède plusieurs sections 5a, 5b, ---, 5i, ---, 5n, successives, pouvant être rendues indépendants les unes des autres, en nombre au moins égal au nombre d'emplacements de bombage et/ou de transfert prévus dans un même élément supérieur 10, qui se succèdent dans la direction longitudinale.

Ainsi dans la mesure où l'on prévoit de traiter simultanément deux plaques de verre 2, deux emplacements juxtaposés dans la direction longitudinale sont prévus et le convoyeur 5 comprend au moins deux sections 5a et 5b qui se suivent et qui aboutissent chacune sous un emplacement de bombage et/ou de transfert. Ces différentes sections 5i, comprennent leurs propres moyens de positionnement des plaques de verre. Ce système référencé 40, montré schématiquement figure 4 est formé par au moins un doigt détecteur 41 faisant saillie au-dessus du plan du convoyeur 5 le long duquel les plaques de verre sont véhiculées. Ce doigt 41 est porté par une tige 42 parallèle aux rouleaux du convoyeur et dans une version préférée, il s'agit même d'un rouleau non entraîné du convoyeur, de diamètre légèrement inférieur à celui des rouleaux normaux du convoyeur.

Lorsque le bord avant d'une plaque de verre rencontre un doigt 41, elle le repousse et entraîne en même temps la rotation de la tige ou rouleau 42, ce qui a pour effet d'escamoter le doigt 41 et de libérer le passage pour la plaque de verre. Cependant, une des extrémités de la tige ou du rouleau 42 est solidaire d'un bras de levier 43 qui, lorsque le doigt 41 est en position active au-dessus du convoyeur 5, repose sur un détecteur de proximité ou micro-contact 44. Au moment où le doigt 41 est touché par la plaque de verre , sa position dans la direction d'avancement du convoyeur est précisément déterminée et on commande l'arrêt du convoyeur avec un retard réglable plus ou moins grand après ce contact avec le doigt 41, concomittant avec le décollement du bras de levier par rapport au micro-contact 44.

Un tel système 40 équipe donc chaque section 5i du convoyeur 5. Un convoyeur 5 à deux sections 5a et 5b destiné à amener des plaques de verre sous un élément supérieur 10 à deux emplacements de bombage juxtaposés dans la direction longitudinale de l'installation est montré schématiquement figure 5.

Il est constitué de rouleaux tels que 50, les uns 50p appartenant au convoyeur principal 5p et étant disposés jusqu'à la sortie du four 1, ceux référencés 50a appartenant à la section 5a qui se termine sous l'emplacement de bombage le plus en amont, ceux référencés 50b appartenant à la section 5b qui se termine sous l'emplacement de bombage le plus en aval.

Chacune de ces portions 5p, 5a, 5b est susceptible d'être entrainée par son moteur 51p pour 5p, 51a et 51b respectivement pour les sections 5a et 5b. Cependant pour autoriser des regroupements de tout ou partie de ces sections 5p, 5a, 5b et leur entrainement à la même vitesse, ou au contraire pour permettre leur séparation et leur fonctionnement dans des conditions différentes, des embrayages 52p, 52a et 52b et 53a, 53b sont prévus sur les systèmes d'entraînement classiques engrenant sur les pignons en bout de rouleau de ces sections de convoyeur. Lorsque 52p, 52a et 52b sont embrayés mais par contre 53a et 53b débrayés, tous les rouleaux tournent à la même vitesse entraînés par le même moteur 51p.

Lorsque 52a et 52b sont débrayés mais 53a et/ou 53b embrayés, le moteur 51p n'a plus d'action sur les sections 5a et 5b du convoyeur général 5, ces sections peuvent être entraînées par leur moteur respectif 51a, 51b, si leur embrayage associé 53a, 53b est embrayé.

Chaque section 5a, 5b est équipée d'un système de positionnement 40 avec doigt détecteur ; sur la figure 5 seul sont représentés les rouleaux ou tiges 42a et 42b porteur du doigt détecteur.

Cet ensemble de convoyage 5 est également équipé d'une cellule 54 de détection du bord avant des plaques de verre à la sortie du four 1.

L'ensemble du convoyeur 5 est entraîné par le moteur 51p, 52a et 52b étant embrayés et 53a et 53b étant débrayés, lorsqu'une plaque de verre avance à l'intérieur du four 1. Lorsque son bord avant est détecté par la cellule 54, et qu'un certain temps réglable s'est écoulé pour permettre la montée de la totalité de la plaque de verre sur la section 5b du convoyeur, 52b est débrayé et 53b est embrayé pour permettre l'entrainement de la section 5b par le moteur 51b. L'entrainement de la section 5b se fait de préférence à la même vitesse que le convoyeur général 5. La plaque de verre sur cette section 5b progresse, rencontre le doigt détecteur associé à un rouleau ou une tige 42b, entreprend sa procédure d'arrêt, puis s'arrête dans la position désirée sous son emplacement de bombage. Pendant ce temps, une seconde plaque de verre a progressé dans le four 1, son bord avant a été intercepté par la cellule 54 et après un certain retard déterminé pour que la totalité de la seconde plaque de verre soit sur la section 5a, 52a est débrayé, 53a embrayé, permettant ainsi à cette seconde plaque de verre d'évoluer sur la section 5a du convoyeur de préférence à la même vitesse que précédemment. Cependant compte tenu de ce que chaque section est indépendante des autres, possède ses propres moyens de positionnement, il est aussi possible que la vitesse de chaque section soit différente de celle du convoyeur principal et/ou de celle des autres sections. Cette seconde plaque de verre intercepte le doigt 41a du rouleau 42a, ce qui enclenche son arrêt. Les plaques de verre en place sous leur emplacement respectif de bombage peuvent recevoir un complément de chauffage grâce aux moyens de chauffage qui équipent l'enceinte 30 et ce complément de chauffage peut être différent d'une plaque à l'autre, en particulier grâce aux moyens de chauffage sur la sole de l'enceinte répartis en zones distinctes ou équipés de caches éventuellement différents.

Pour simplifier les explications, seul un élément supérieur 10 à deux postes de bombage et/ou de transfert associé à un convoyeur à deux sections auxiliaires 5a et 5b a été décrit.

Cependant, un nombre plus important de postes est possible en particulier trois, il suffit d'ajouter une section 5c et éventuellement d'autres, au convoyeur 5, cette (ou ces) section(s) supplémentaire(s) étant équipée(s) de ces (leurs) moyens propres de positionnement des plaques de verre. Ces sections se succèdent dans la direction longitudinale mais il est également possible de prévoir des sections juxtaposées dans la direction transversale. Ces systèmes permettent d'atteindre une précision de positionnement des plafonds de verre de l'ordre de 1/10 mm à 5/10 mm.

Ces opérations d'arrivée, de positionnement et d'arrêt des plaques de verre ont pratiquement lieu en même temps, si bien que les plaques de verre destinées à être prises en charge par le même élément supérieur 10 sont disponibles presque en même temps.

Cependant, la recherche de la stricte similitude des temps d'arrêt des différentes plaques de verre compliquerait l'installation. Aussi pour compenser les éventuels écarts qui bien que faibles existent entre chaque plaque de verre, et pour éviter aussi qu'une plaque de verre arrivée en position, n'ait à attendre les autres plaques de verre destinées à être prises en charge par le même élément supérieur 10, en arrêt sur les rouleaux du convoyeur et ne s'y colle, les moyens d'aspiration associés à l'emplacement de bombage et/ou de transfert sous lequel une plaque de verre est disponible, sont mis en action immédiatement indépendamment de ceux associés aux autres emplacements sous lesquels des plaques de verre ne sont pas encore disponibles. Pour cela dans le circuit d'alimentation de la (ou des) trompe (5) associée(s) à cet emplacement, l'ouverture de l'électrovanne par ex. 25 est commandée, ce qui déclenche l'aspiration à niveau élevé et fait se plaquer la plaque de verre la première en place, contre la plaque d'appui telle que 17 ou 18 associé à l'emplacement de bombage et/ou de transfert en cause.

Après quelques instants, une seconde, puis éventuellement ensuite une troisième plaque de verre et ainsi de suite seront prises en charge par l'élément supérieur.

Chaque plaque de verre prise en charge est ensuite maintenue grâce à une dépression de plus faible niveau résultant de la fermeture des électrovannes du type 25 associées aux moyens de réglage de la dépression du type 23 et de l'ouverture des électrovannes du type 26 associées aux moyens de réglage de la dépression du type 24.

Une fois que toutes les plaques de verre sont prises par l'élément supérieur 10, celui-ci est élevé pour permettre l'entrée d'un ou de plusieurs éléments inférieurs 11 d'évacuation et/ou de bombage.

Les plaques de verre sont ensuite lachées ou posées simultanément, ou à des instants différents, sur les éléments inférieurs de bombage et/ou d'évacuation 11 qui les attendent.

Grâce à la prise en charge et/ou au relachement des plaques de verre à des instants qui peuvent être différents d'une plaque de verre à l'autre, grâce également aux compléments de chauffage en particulier sous les plaques de verre, différenciables d'un emplacement de bombage à l'autre, les états thermiques des plaques de verre qui peuvent être différents d'une plaque de verre à l'autre, du fait en particulier des longueurs différentes de trajet jusque sous les divers emplacements de bombage et/ou de transfert, peuvent ne pas avoir de conséquences sur le traitement des plaques de verre.

Bien entendu si cette indépendance des moyens d'aspiration permet de corriger des différences pour faire en sorte que toutes les plaques de verre bombées en même temps soient identiques malgré ces différences, notamment d'état thermique, elle permet aussi de traiter différemment des plaques de verre en vue de créer volontairement des différences entre . elles ou de les accentuer, si on le désire.

Dans la mesure où l'on ne recherche pas de telles différences, mais au contraire des plaques de verre identiques, les sorties de la cellule de bombage vers le ou les poste(s) de trempe se fait latéralement perpendiculairement à la direction longitudinale de l'installation de façon que toutes les plaques de verre provenant du même élément supérieur 10 suivent des trajets équivalents et subissent donc simultanément des traitements identiques.

Bien entendu, dans la mesure où au contraire une différenciation des plaques de verre est recherchée, cette différenciation qui comme déjà dit précédemment peut se faire au niveau du chauffage, peut aussi se faire ou s'accentuer au niveau de la trempe. Pour cela, avantageusement, les moyens de trempe constitués par des caissons et des buses de soufflage non représentés sur les figures, seront divisés en zones indépendantes aptes à fonctionner si désiré selon des conditions réglables différentes. En vue d'obtenir une telle souplesse de fonctionnement, les moyens de soufflage seront, dans chaque zone, montés à position réglable par rapport aux plaques de verre.

Dans tous les cas où une telle différenciation à la trempe ne sera pas recherchée, les conditions de fonctionnement du soufflage dans les différentes zones indépendantes seront réglées de façon identique.

Le nombre de zones indépendantes du soufflage correspondra avantageusement au nombre d'emplacements de montage et/ou de transfert prévus sur l'élément supérieur 10.

La répartition de ces zones sera avantageusement selon la direction de progression des plaques de verre à la trempe.

A la trempe les plaques de verre sont portées par un ou plusieurs chariots équipés d'éléments inférieurs d'évacuation et/ou de bombage, en particulier des formes de bombage constituées par des anneaux à profil courbe, ouverts en leur centre.

Ce ou ces chariots roule(nt) avantageusement sur des rails 7 disposés latéralement par rapport au poste de trempe.

Avantageusement pour favoriser l'échappement de l'air de trempe les poutrelles de ces chariots sont ajourées et toutes les pièces qui les constituent sont d'un encombrement réduit, de préférence elles sont toutes juxtaposées dans le plan de trempe, latéralement et à l'extérieur de la zone de soufflage, et possèdent une hauteur réduite.

L'invention a été décrite avec une seule rangée de postes de bombage et/ou de transfert sur un même élément supérieur 10.

Bien entendu, deux ou plusieurs rangées parallèles de postes de bombage et/ou de transfert sur un même élément supérieur 10 sont également possibles.

L'invention décrit une trempe des plaques de verre à la suite de leur bombage, mais bien entendu, les plaques de verre après leur bombage peuvent subir un traitement autre que la trempe, en particulier une recuisson. L'évacuation des plaques de verre du poste de bombage s'effectuera de préférence latéralement pour conserver auxdites plaques de verre, une équivalence de trajet et de traitement, dans la mesure bien sûr où cela est désiré.

Grâce à l'invention, la capacité élevée de fabrication de vitrages bombés et éventuellement aussi trempés, n'est pas incompatible avec une haute qualité de ces vitrages, en particulier avec une très grande précision dans la forme des vitrages due à un positionnement individualisé de chaque plaque et à une prise en compte des états thermiques différents des divers plaques de verre convoyées selon des trajets différents.

**Revendications**

1. Procédé de bombage de plaques de verre (2) dans lequel à chaque cycle, plusieurs plaques de verre (2) réchauffées dans un four (1), sont amenées les unes à la suite des autres par un même convoyeur (5) sur des sections séparables (5a, 5b, ..., 5n) dudit convoyeur (5) qui se suivent dans la direction longitudinale d'avancement dudit convoyeur (5) et qui sont au moins en partie disposées sous un élément supérieur (10) comportant plusieurs emplacements (17, 18) de bombage et/ou de transfert qui se succèdent dans la direction longitudinale, sont prises en charge par cet élément supérieur (10), sont relâchées sur des éléments inférieurs d'évacuation et/ou de bombage (11) entrés entre-temps sous l'élément supérieur (10), puis sont évacuées, **caractérisé en ce que** les prises en charge et/ou les relâchements de toutes les plaques de verre (2), au cours d'un même cycle ont lieu indépendamment les unes des autres, à des instants qui peuvent être différents d'une plaque de verre (2) à l'autre, et en ce que les plaques de verre (2) devant être traitées au cours d'un même cycle sont positionnées indépendamment les unes des autres sous leurs emplacements respectifs (17, 18) de bombage et/ou de transfert sur des sections (5a, 5b, ... 5n) de convoyeur (5) rendues indépendantes, équipées chacune de leurs propres moyens d'entraînement, de positionnement et d'arrêt des plaques de verre (2).

2. Procédé selon la revendication 1, **caractérisé en ce que** les plaques de verre (2) passent du convoyeur général (5) qui leur a fait traverser le four (1), à chacune des diverses sections séparables (5a, 5b, ..., 5n) de convoyeur disposées au moins en partie sous chaque emplacement (17, 18) de bombage et/ou de transfert, en conservant la même vitesse, au moins jusqu'à la mise en route de la procédure d'arrêt.

3. Procédé selon les revendications précédentes, **caractérisé en ce qu'**après leur bombage, les plaques de verre (2) sont évacuées vers la trempe latéralement selon une direction perpendiculaire à la direction d'avancement des plaques de verre avant le bombage.

4. Procédé selon les revendications précédentes, **caractérisé en ce que** chacune des plaques de verre (2) destinées à être bombées au cours du même cycle, est prise en charge par l'élément supérieur dès qu'est terminé son positionnement sous un emplacement (17, 18) de l'élément supérieur (10), sans attendre que le positionnement des autres plaques de verre (2) à bomber au cours du même cycle soit terminé.

5. Procédé selon l'une des revendications précédentes, **caractérisé en ce que** l'élément supérieur (10) est relevé pour laisser entrer sous lui au moins un élément inférieur (11) de bombage et/ou d'évacuation après que tous ses emplacements de bombage et/ou de transfert aient pris en charge une plaque de verre.

6. Procédé selon l'une des revendications précédentes, **caractérisé en ce que** les plaques de verre (2) disposées sous leur emplacement de bombage respectif (17, 18) sont soumises à un chauffage complémentaire différencié d'une plaque de verre à l'autre.

7. Installation de bombage de plaques de verre comportant un four (1) de réchauffage, une cellule (3) de bombage comporte un élément supérieur (10) à plusieurs emplacements qui se succèdent dans une direction longitudinale, un convoyeur (5) à plusieurs sections séparables qui se suivent dans la direction longitudinale qui est celle de son avancement traversant le four (1) et amenant les plaques de verre dans la cellule (3) de bombage et au moins un élément inférieur (11) d'évacuation et/ou de bombage sur lequel sont relâchées les plaques de verre après qu'elles aient été saisies par l'élément supérieur et appliquées contre ses emplacement et que l'élément inférieur (11) soit entré pour se disposer sous les plaques de verre, **caractérisé en ce qu'**à chaque emplacement de l'élément supérieur (10) sont associés des moyens de retenue propres par dépression, aptes à fonctionner indépendamment des autres moyens de retenue par dépression associés aux autres emplacements (10), et en ce que chacune des sections séparables du convoyeur (5) est disposée au moins en partie sous un emplacement de bombage et/ou de transfert et est équipée de ses propres moyens d'entraînement et de ses propres moyens de positionnement et d'arrêt des plaques de verre sous l'emplacement de bombage et/ou de transfert qu'elle alimente.

8. Installation selon la revendication 7, **caractérisée en ce qu'**il est prévu au moins une section séparable du convoyeur 5 par emplacement de bombage et/ou de transfert de l'élément supérieur (10).

9. Installation selon l'une des revendications 7 à 8, **caractérisée en ce que** le poste de trempe (4) ou un poste de recuisson qui fait suite à la cellule de bombage (3) est disposé latéralement par rapport à ladite cellule de bombage (3), les plaques de verre sortant de la cellule de bombage (3) vers le poste de trempe (4) ou le poste de recuisson suivant une direction perpendiculaire à la direction d'avance des plaques de verre sur le convoyeur (5) avant la cellule de bombage (3).

10. Installation selon l'une des revendications 7 à 9, **caractérisée en ce que** les moyens produisant la dépression associés à chaque poste de l'élément de bombage et/ou de transfert (10) comportent sur chacune de deux branches en parallèle de leur circuit un moyen de réglage du niveau de dépression et une électrovanne, le niveau de dépression prévu pour l'un des moyens monté sur une tranche de circuit étant élevé comparé au niveau de dépression de l'autre moyen monté sur l'autre branche du circuit desservant les mêmes moyens produisant la dépression.

11. Installation selon l'une des revendications 7 à 10, **caractérisée en ce que** l'élément supérieur (10) de bombage et/ou de transfert comporte plusieurs chambres séparées formant caissons d'aspiration, alimentant chacune un poste de bombage et/ou de transfert, ayant chacune ses moyens de production de la dépression.

12. Installation selon l'une des revendications 7 à 12, **caractérisée en ce que** des moyens de chauffage sont disposés dans la cellule de bombage, au moins sur sa sole, répartis en zones distinctes correspondant chacune à un poste de bombage ou associés à des caches pouvant être différents d'un poste de bombage à l'autre.

## Claims

1. Method of curving glass plates (2) in which, in each cycle, several glass plates (2), heated in a furnace (1), are brought one after another by a single conveyor (5) onto separable sections (5a, 5b, ..., 5n) of said conveyor (5) which follow one another in the longitudinal direction of advance of said conveyor (5) and which are disposed at least partly beneath an upper element (10) comprising several positions (17, 18) for curving and/or transfer which follow one another in the longitudinal direction, are taken over by this upper element (10), are released onto lower discharging and/or curving elements (11) which meantime have entered beneath the upper element (10), and are then discharged, characterized in that the operations of taking over and/or releasing of all the glass plates (2), during a single cycle, take place independently of one another at instants which may be different from one glass plate (2) to another, and in that the glass plates (2) which are to be treated during a single cycle are positioned independently of one another beneath their respective curving and/or transfer positions (17, 18) on sections (5a, 5b, ..., 5n) of conveyor (5) rendered independent of one another, each equipped with their own drive, positioning and stopping means for the glass plates (2).

2. Method according to Claim 1, characterized in that the glass plates (2) pass from the general conveyor (5) which has brought them through the furnace (1) to each of the different, separable conveyor sections (5a, 5b, ..., 5n) disposed at least partly beneath each curving and/or transfer position (17, 18), while maintaining the same speed at least until the commencement of the stopping procedure.

3. Method according to the preceding Claims, characterized in that after they have been curved, the glass plates (2) are removed laterally to the toughening station in a direction perpendicular to the direction of advance of the glass plates before curving.

4. Method according to the preceding Claims, characterized in that each of the glass plates (2) intended to be curved during the same cycle is taken over by the upper element as soon as its positioning beneath a position (17, 18) of the upper element (10) is completed, without waiting for the positioning of the other glass plates (2) to be curved during the same cycle to be completed.

5. Method according to one of the preceding Claims, characterized in that the upper element (10) is raised to allow at least one lower curving and/or discharge element (11) to enter beneath it after all its curving and/or transfer positions have taken over a glass plate.

6. Method according to one of the preceding Claims, characterized in that the glass plates (2) disposed beneath their respective curving position (17, 18) are subjected to a complementary heating differentiated from one glass plate to another.

7. Apparatus for curving glass plates, comprising a heating furnace (1), a curving cell (3) comprising an upper element (10) having several positions which follow one another in a longitudinal direction, a conveyor (5) having several separable sections which follow one another in the longitudinal direction, which is that of its advance through the furnace (1) and bringing the glass plates into the curving cell (3), and at least one lower discharge and/or curving element (11), onto which the glass plates are released after they have been picked up by the upper element and applied against its positions and the lower element (11) has entered to position itself beneath the glass plates, characterized in that, with each position of the upper element (10), there are associated its own suction holding means, adapted to operate independently of the other suction holding means associated with the other positions (10), and in that each of the separable sections of the conveyor (5) is disposed at least partly beneath a curving and/or transfer position and is equipped with its own drive means and its own means for positioning and stopping the glass plates beneath the curving and/or transfer position which it feeds.

8. Apparatus according to Claim 7, characterized in that at least one separable section of the conveyor (5) is provided for each curving and/or transfer position of the upper element (10).

9. Apparatus according to one of Claims 7 to 8, characterized in that the toughening station (4) or an annealing station which follows the curving cell (3) is disposed laterally of said curving cell (3), the glass plates leaving the curving cell (3) towards the toughening station (4) or annealing station following a direction perpendicular to the direction of advance of the glass plates on the conveyor (5) before the curving cell (3).

10. Apparatus according to one of Claims 7 to 9, characterized in that the means creating the suction associated with each station of the curving and/or transfer element (10) comprise, on each of the two parallel branches of their circuit, a means for regulating the suction level and an electrically operated valve, the suction level provided for one of the means mounted on one arm of the circuit being high compared with the suction level of the other means, mounted on the other arm of the circuit, serving the same means creating the suction.

11. Apparatus according to one of Claims 7 to 10, characterized in that the upper curving and/or transfer element (10) comprises several separate chambers forming suction chests, each supplying one curving and/or transfer station, each having its own means for creating the suction.

12. Apparatus according to one of Claims 7 to 12, characterized in that the heating means are disposed in the curving cell, at least on the floor, distributed in distinct zones each corresponding to one curving station or associated with masks which may be different from one curving station to another.

**Patentansprüche**

1. Verfahren zum Biegen Von Glasplatten (2), bei welchem in jedem Zyklus mehrere in einem Ofen (1) erwärmte Glasplatten (2) nacheinander von demselben Förderer (5) auf von diesem Förderer (5) trennbaren Abschnitten (5a, 5b,..., 5n) gefördert werden, die in der Längsrichtung des Vorschubs dieses Förderers (5) aufeinander folgen und mindestens teilweise unter einem oberen Element (10) angeordnet sind, das mehrere in Längsrichtung aufeinanderfolgende Stellen (17, 18) zum Biegen und/oder zum Transfer aufweist, bei welchem die Platten vom oberen Element (10) Übernommen werden, auf die unteren, inzwischen unter das obere Element (10) gerückten Elemente zur Abführung und/oder zum Biegen (11) freigegeben und dann abgeführt werden, **dadurch gekennzeichnet,** daß die Aufnahme- und/oder die Freigabevorgänge aller Glasplatten (2) im Laufe des gleichen Zyklus unabhängig voneinander zu Zeitpunkten, die von einer Glasplatte (2) zur anderen variieren können, stattfinden und daß die Glasplatten (2) vor ihrer Bearbeitung im Laufe eines Zyklus unabhängig voneinander unter ihren jeweiligen Stellen (17, 18) zum Biegen und/oder Transfer auf den Abschnitten (5a, 5b, ... 5n) des Förderers (5) positioniert werden, die unabhängig voneinander sind und jeweils ihre eigenen Einrichtungen zum Transport, zur Positionierung und zum Anhalten der Glasplatten (2) aufweisen.

2. Verfahren nach Anspruch 1, dadurch gekennzeichnet, daß die Glasplatten (2) vom Hauptförderer (5), der ihren Durchlauf durch den Ofen (1) bewirkt, zu jedem der verschiedenen trennbaren Abschnitte (5a, 5b, ..., 5n) des Förderers gelangen, die zumindest teilweise unter jeder Stelle (17, 18) zum Biegen und/oder Transfer gelegen sind, wobei zumindest bis zum Start des Anhaltevorgangs die gleiche Geschwindigkeit beibehalten wird.

3. Verfahren nach den vorhergehenden Ansprüchen, dadurch gekennzeichnet, daß die Glasplatten (2) nach dem Biegen zum Vorspannen seitlich in einer Richtung senkrecht zur Vorschubrichtung der Glasplatten vor dem Wölben abgeführt werden.

4. Verfahren nach den vorhergehenden Ansprüchen, dadurch gekennzeichnet, daß jede Glasplatte (2), die innerhalb des gleichen Zyklus gebogenn werden soll, vom oberen Element sofort nach ihrer Positionierung unter einer Stelle (17, 18) des oberen Elements (10) aufgenommen wird, ohne die Beendigung der Positionierung der anderen innerhalb des gleichen Zyklus zu biegenden Glasplatten (2) abzuwarten.

5. Verfahren nach einem der vorhergehenden Ansprüche, dadurch gekennzeichnet, daß das obere Element (10) angehoben wird, damit darunter mindestens ein unteres Element (11) zum Biegen und/oder zur Abführung eingeführt werden kann, nachdem alle seine Stellen zum Biegen und/oder zur Übergabe eine Glasplatte aufgenommen haben.

6. Verfahren nach einem der vorhergehenden Ansprüche, dadurch gekennzeichnet, daß die unter ihren jeweiligen Biegestellen (17, 18) gelegenen Glasplatten (2) einer zusätzlichen Erwärmung unterzogen werden, die von einer Platte zur anderen unterschiedlich ist.

7. Vorrichtung zum Biegen von Glasplatten, umfassend einen Wärmeofen (1), eine Biegestation (3) mit einem oberen Element (10) mit mehreren Stellen, die in Längsrichtung aufeinanderfolgen, einen Förderer (5) mit mehreren trennbaren Abschnitten, die in der Längsrichtung aufeinanderfolgen, die dem Vorschub durch den Ofen (1) entspricht und der die Glasplatten in die Biegestation (3) führt, und mindestens ein unteres Element (11) zum Abführen und/oder Biegen, auf welches die Glasplatten freigegeben werden, nachdem sie vom oberen Element aufgegriffen wurden und gegen seine Stellen zur Anlage gekommen waren, und nachdem das untere Element (11) eingerückt ist, um sich unter den Glasplatten zu positionieren, dadurch gekennzeichnet, daß mit jeder Stelle des oberen Elementes (10) eigene, durch Unterdruck wirkende Rückhaltemittel verbunden sind, die unabhängig von den anderen, mit den anderen Stellen (10) verbundenen Unterdruck-Rückhaltemitteln wirken, und daß jeder der trennbaren Abschnitte des Förderers (5) zumindest teilweise unter einer Stelle zum Biegen und/ oder Transfer gelegen ist und seine eigenen Antriebsmittel und eigene Einrichtungen zur Positionierung und zum Anhalten der Glasplatten unter der Stelle zum Biegen und/oder Transfer, die er beschickt, aufweist.

8. Vorrichtung nach Anspruch 7, dadurch gekennzeichnet, daß mindestens ein trennbarer Abschnitt des Förderers (5) pro Stelle zum Biegen und/oder Transfer des oberen Elements (10) vorgesehen ist.

9. Vorrichtung nach einem der Ansprüche 7 bis 8, dadurch gekennzeichnet, daß die der Biegestation (3) folgende Vorspannstation (4) oder Kühlstation seitlich bezüglich der Biegestation (3) angeordnet ist, wobei die Glasplatten aus der Biegestation (3) in Richtung der Vorspannstation (4) oder der Kühlstation senkrecht zur Vorschubrichtung der Glasplatten auf dem Förderer (5) vor der Biegestation (3) austreten.

10. Vorrichtung nach einem der Ansprüche 7 bis 9, dadurch gekennzeichnet, daß die den Unterdruck erzeugenden Mittel, die mit jeder Stelle des Biege- und/oder Transferelements (10) verbunden sind, auf jedem ihrer beiden, parallel zu ihrem Kreislauf angeordneten Zweige eine Regelungseinrichtung für die Höhe des Unterdrucks und ein Elektroventil aufweisen, wobei die Höhe des Unterdrucks, die für das eine der auf einem Abschnitt des Kreislaufs angeordneten Mittel vorgesehen ist, im Vergleich zur Höhe des Unterdrucks des am anderen Zweig des Kreislaufs angeordneten anderen Mittels, das die gleichen den Unterdruck erzeugenden Mittel steuert, erhöht ist.

11. Vorrichtung nach einem der Ansprüche 7 bis 10, dadurch gekennzeichnet, daß das obere Element (10) zum Biegen und/oder Transfer mehrere getrennte Kammern aufweist, die Ansaugkammern bilden, wobei jede eine Biege- und/oder Transferstelle beschickt und jede eigene Einrichtungen zur Erzeugung des Unterdrucks aufweist.

12. Vorrichtung nach einem der Ansprüche 7 bis 11, dadurch gekennzeichnet, daß die Heizeinrichtungen in der Biegestation, zumindest auf deren Boden, angeordnet sind und in abgegrenzte Bereiche aufgeteilt sind, die jeweils einer Biegestelle entsprechen, oder mit Abdeckungselementen verbunden sind, die von einer Biegestelle zur andern differieren können.

EP 0 267 121 B1

Fig 1

Fig 2

23   25   21

24   26

22

Fig 3

21

40

41   44

2

5  5

4   43   42   5i

Fig 4

Fig 5